(19) Europäisches Patentamt European Patent Office Office européen des brevets

(11) **EP 1 835 062 B1**

(12) **EUROPEAN PATENT SPECIFICATION**

(45) Date of publication and mention
of the grant of the patent:
**12.08.2009 Bulletin 2009/33**

(51) Int Cl.:
***D06F 37/30*** *(2006.01)*

(21) Application number: **06111318.9**

(22) Date of filing: **17.03.2006**

(54) **Clothes washing machine with motor torque measuring device**

Waschmaschine mit einem Gerät zum Messen des Motordrehmoments

Machine à laver avec un dispositif pour mesurer le couple d'un moteur

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**19.09.2007 Bulletin 2007/38**

(73) Proprietor: **Electrolux Home Products
Corporation N.V.
1930 Zaventem (BE)**

(72) Inventor: **Altinier, Fabio
33080 Porcia (Pordenone) (IT)**

(74) Representative: **Baumgartl, Gerhard Willi et al
AEG Hausgeräte GmbH
Group Intellectual Property
90327 Nürnberg (DE)**

(56) References cited:
**EP-A- 1 609 901          WO-A-01/90472
US-A- 4 853 605          US-A1- 2004 211 009**

**Description**

The present invention refers to an improved kind of clothes washing machine, preferably of the type intended for household use, which allows the amount, i.e. weight of the washload and an unbalanced condition thereof to be measured in a particularly efficient and reliable manner.

Household clothes washing machines provided with a horizontal-axis rotating drum - either of the front-loading or the top-loading type - are generally known to have a major drawback in the operation thereof, which is basically inherent to the very nature and construction thereof. In fact, during the final phase of the high-speed spin-extraction cycle, the washload usually tends to distribute in an uneven manner along the inner walls of the rotating drum and such occurrence typically gives rise to unbalance problems, which all those skilled in the art are well aware of, so that no need arises here to dwell upon them any further.

A washing machine with the features of the preamble is disclosed in US 2004/0211009.

In view of doing away or, at least, minimizing such drawback, a wide variety of solutions have been developed and proposed: so, for instance, reference should be made in this connection to the European patent application No. 04102927.3 by this same Applicant and the disclosure set forth therein.

The above-cited document describes a method for measuring the moment of inertia of the drum, which in turn enables a procedure to be activated by the control means of the machine for bringing the washload into a balanced condition again.

However, for such method for measuring the moment of inertia of the drum to be able to be carried out, the need arises for also the rotational speed of the drum to be preliminarily measured - both before and during said procedure - along with the driving torque supplied by the motor.

As far as the driving torque supplied by the torque is concerned, a variety of measuring methods are known in the art; one of these methods consists of measuring the vector of the current absorbed by the motor as compared with the voltage thereof. Such method, however, is rather complicated to be practically carried into effect in the light of the high-accuracy and practicableness requirements it has to comply with.

Moreover, a particularly serious drawback connected with the method using the measurement of the motor current lies in the fact that such measurement is only feasible, i.e. can only be performed on a connection coupled with the line voltage and, therefore, not an isolated one, as this would on the contrary be most desirable if the generated signal has to undergo further processing.

In addition, in low-priced household clothes washing machines use is generally made of so-called universal motors, owing to the latter being extremely low in cost and not requiring any sophisticated control system. It is however exactly on this ground that such machines practically ensure limited performance capabilities and, even if they are generally provided with means adapted to measure the motor torque, such measurement is however performed with means of a traditional kind that suffer from all afore-described drawbacks.

Known from the Japanese patent No. 03040744 A2 is another method, which is used in connection with a universal motor and is based on the installation - within the stator - of a control turn or loop that intercepts part of the flux linkage in said stator, and that - based on the voltage generated thereacross - works out the instant motor torque.

This solution, however, is found to be scarcely suitable for application in a clothes washing machine, since no indication is given on how the thus obtained information can actually be used practically even in the presence of non-controllable variables, such as in particular a variation in the instant value of the supply voltage, a variation in temperature, wear-down of brushes, and the like.

It would therefore be desirable, and is actually a main object of the present invention, to provide a clothes washing machine using a universal motor and equipped with associated devices for measuring and processing signals that are representative of the instant motor torque.

According to the present invention, this aim is reached in a clothes washing machine incorporating the features and characteristics as recited in the appended claims.

Features and advantages of the present invention will anyway be more readily understood from the description that is given below by way of nonlimiting example with reference to the accompanying drawings, in which:

- Figure 1 is a symbolical view of the stator and rotor arrangement of a universal motor provided with brushes, and the arrangement of a coil according to the present invention;

- Figure 2 is a symbolical schematic view of the electric circuit of the motor shown in Figure 1;

- Figure 3 is a schematic view of a first embodiment of a circuit according to the present invention;

- Figure 4 is a schematic view of an improved embodiment of the circuit shown in Figure 3;

- Figure 5 is a diagrammatical view symbolically illustrating the pattern of the output voltage from the circuit shown in Figure 4.

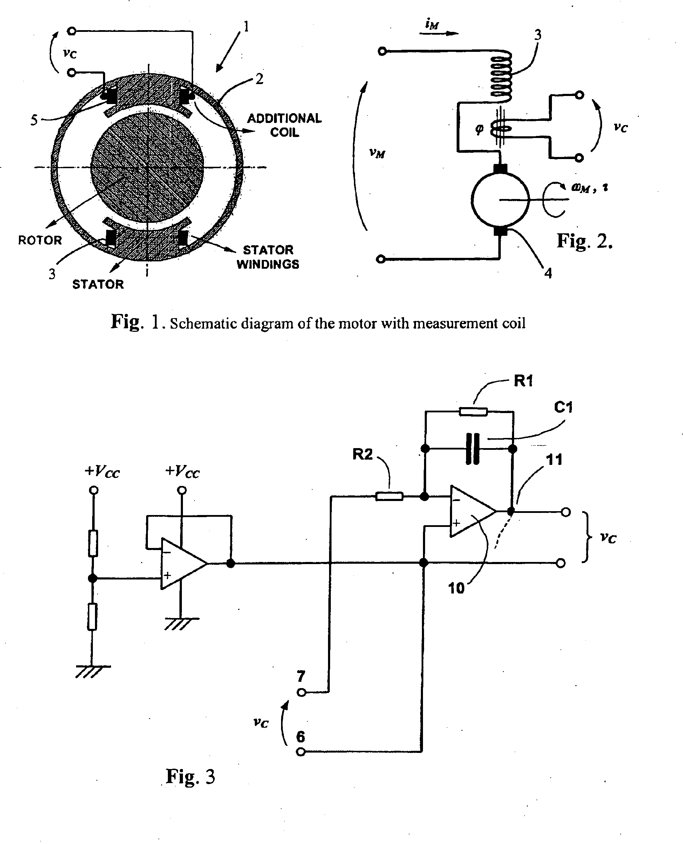

With reference to Figures 1 and 2, in a clothes washing machine according to the present invention there is provided a universal motor 1, which is adapted to rotatably drive the rotating drum of said machine, and which is basically comprised of a casing 2, a stator winding 3 and, connected in series thereto, a rotor winding 4.

Furthermore, said clothes washing machine comprises means for controlling said motor, including also voltage-regulator devices that are implemented in the form of conventional TRIAC devices, which - owing to them being largely known as such in the art - shall not be illustrated and described to any greater detail herein.

The clothes washing machine also includes an additional measurement coil 5, which - as this is best shown in Figure 1 - links up with a polarity 16 of said casing 2.

This additional coil 5 links up with the electromagnetic flux passing through the casing of said motor, so that a voltage is generated thereacross, which is representative of the intensity, i.e. strength and frequency of said flux.

Following relations should now be considered:

$$v_M = R \cdot i_M + L \cdot \frac{di_M}{dt} + e_A$$

$$e_A = K_E \cdot \varphi \cdot \omega_M$$

$$\varphi = K_F \cdot i_M$$

$$\tau = K_M \cdot \varphi \cdot i_M = \frac{K_M}{K_F} \cdot \varphi^2$$

$$v_C = K_C \cdot \frac{d\varphi}{dt}$$

$$\Rightarrow \quad \varphi = \frac{1}{K_C} \int v_C \cdot dt$$

$$\Rightarrow \quad \tau = \frac{K_M}{K_F} \cdot \left( \frac{1}{K_C} \int v_C \cdot dt \right)^2$$

wherein:

$V_M$    = Main voltage
$V_C$    = Coil voltage for measuring motor torque
$i_M$    = Motor current
$\varphi$    = Motor magnetic flux
$\omega_M$    = Motor speed

$\tau$    = Motor torque
$R$    = Electric resistance
$L$    = Inductance
$e_A$    = Electric counter-voltage

It should now be noticed that, in the last relation, the value of the torque $\tau$ is represented as being proportional - with the constant indicated therein, i.e.

$$\frac{K_M}{K_F \cdot K_C^2}$$    - to the square function of the voltage integral of the electromotive force of said coil, as measured in time.

At this point, it can therefore be readily appreciated that solving said integration function is all it takes to obtain a value that is univocally representative of the desired motor torque.

To this purpose, and with reference to Figure 3, the voltage $V_C$ generated by such additional coil 5 is connected to an integrating circuit comprising:

- the input terminals 6, 7;
- an operational amplifier 10;
- a capacitor C1 connected between the output terminal 11 of said operational amplifier 10 and an input terminal 7 via a resistor R2 for regulating the input current to said operational amplifier 10;
- a resistor C1 connected in a parallel arrangement to said capacitor C1.

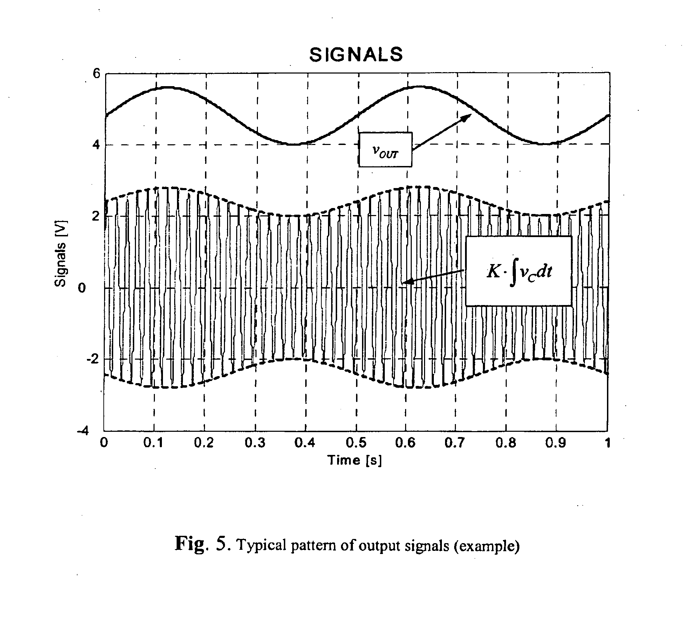

It has been found and demonstrated that such circuit is capable of effectively perform in a simple manner the function of integrating the signal being sent to the input terminals, whereas the resulting signal being output at the output terminal 11 is represented schematically in Figure 5.

Anyway, the present invention proves utmost useful and effective when the drum is driven to rotate at a speed, at which the spin-extraction cycle is just prepared, but not yet started, actually. In this preliminary phase, the drum is in fact driven to rotate at a so-called "distribution" speed, i.e. at a speed at which the washload is allowed to distruibute along the inner cylindrical surface of the same drum, wherein this usually occurs at a rotating speed of approx. 120 rpm.

Under these circumstances, a signal output pattern is typically obtained as the one represented in the diagram appearing in Figure 5, which is in fact modulated according to such rate, i.e. rotating speed of the drum. However, if the signal $V_C$, which is very fast since it corresponds to the motor supply frequency, i.e. the power supply frequency, is to be integrated numerically, the need would arise for it to be sampled at a sufficiently high frequency; in practice, however, such requirement proves neither necessary nor useful, since what really matters in this case is the slowly variable component of such function, i.e. the envelope or peak-to peak curve

$V_{out}$.

Therefore, for this function to be identified, an appropriate electric circuit is connected to the output terminal 11 of said operational amplifier, which is adapted to detect and represent the peak-to-peak voltage $V_{out}$ existing at the input side of said circuit, i.e. at said terminal 11.

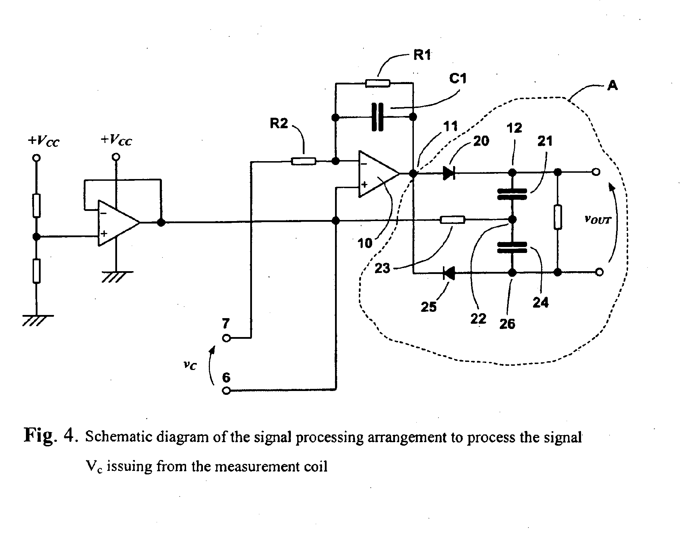

Electronic circuits capable of performing such function are available in a large number and are generally known as such in the art, so that they shall not be specially described herein. Only a particularly simple and effective circuit - illustrated in Figure 4 - shall be cited here by way of example.

This circuit - clearly represented inside the dashed-line circle A in Figure 4 - has a substantially symmetrical configuration and is based on a first rectifier member 20 connected with a terminal thereof to said output terminal 11 of said operational amplifier 10 and, with the other terminal 12 thereof, to a first capacitor 20 that is in turn connected with the other terminal 22 thereof - possibly via an attenuation resistor 23 - to the input 6 of said integrator circuit 10 that is different from the input 7 to said operational amplifier, which also said capacitor C1 and said resistor R 1 are connected to.

Said other terminal 22 is furthermore connected - via a second capacitor 24 and a second rectifier member 25 - to the same output terminal 11 of the operational amplifier 10, wherein it should be noticed that said second rectifier member 25 and said first rectifier member 20 are connected to said output terminal 11 with opposite polarities.

Therefore, the peak-to-peak signal $V_{out}$ is produced and detected between said other terminal 12 of said first capacitor and the terminal 26 connected between said second capacitor 24 and the related second rectifier member 25.

According to what has been described and explained hereinbefore, this signal shall then be further processed and conditioned to ultimately represent the value of the motor torque, in accordance with the afore-indicated mathematical relations and functions, wherein these operations can anyway be performed with such means and methods as generally known to those skilled in the art, which - due to them not falling within the scope of the present invention - are not dealt with to any further detail herein.

## Claims

1. Clothes washing machine or washer-dryer combination, preferably of the household type, comprising:

   - a rotating drum for holding the clothes to be washed and/or dried, adapted to rotate about an axis that is either substantially horizontal or inclined,
   - a universal motor (1) adapted to selectively drive said drum rotatably,
   - means for controlling the rotating speed of said motor,
   - means for measuring a quantity that is representative of the driving torque supplied by said motor,

   **characterized in that** said measurement means comprise at least an additional coil (5) adapted to link up with at least a part of the electromagnetic flux passing through said motor, and **in that** said machine is provided with means for processing the electric signal produced by said additional coil so as to be adapted to represent the average and instant driving torque of said motor in accordance with said signal supplied by said additional coil (5).

2. Machine according to claim 1, **characterized in that** said means for processing said electric signal comprise integration means, preferably an integrator circuit, for integrating said signal.

3. Machine according to claim 2, **characterized in that** said integrator circuit comprises:

   - an operational amplifier (10),
   - a capacitor (C1) and a resistor (R1), arranged in parallel relative to each other and connected in series with an end thereof to the output terminal (11) of said operational amplifier and, with the opposite end thereof via a resistor (R2), to the input terminal (7) of the same integrator circuit.

4. Machine according to claim 2, **characterized in that** said means for processing the electric signal generated by said additional coil (5) comprise a circuit adapted to deliver the peak-to-peak voltage ($V_{out}$) of the signal generated by said integrator circuit.

5. Machine according to claim 4, **characterized in that** said means delivering the peak-to-peak voltage comprise:

   - a first current rectifier member (20) connected with a terminal thereof having a definite polarity to the output terminal (11) of said operational amplifier (10), and
   - connected in series with a first capacitor (21), the opposite terminal (22) of which is connected, possibly via an impedance (23), to an input (6) for said signal issuing from said additional coil (5);
   - a second current rectifier member (25) connected with a terminal thereof to said output (11) of said operational amplifier, said terminal having a polarity that is opposite to the polarity of the terminal with which said first current rectifier member (20) is connected to the same output terminal (11),
- said second current rectifier member (25) being further connected in series to a second capacitor (24), which is in turn connected with the opposite terminal thereof to said opposite terminal (22) of said first capacitor (21).

**Patentansprüche**

1. Wäschewaschmaschine oder Waschmaschine-Trockner-Kombination, vorzugsweise vom Haushaltstyp, umfassend:

   - eine rotierende Trommel zum Halten der zu waschenden und/oder zu trocknenden Kleidungsstücke, die geeignet ist, sich um eine Achse zu drehen, die entweder im Wesentlichen horizontal oder geneigt ist,
   - einen Universalmotor (1), der zum selektiven Drehantrieb der Trommel geeignet ist,
   - Mittel zur Steuerung der Drehgeschwindigkeit des Motors,
   - Mittel zum Messen einer Quantität, die repräsentativ für das Antriebsmoment ist, das von dem Motor geliefert wird,

   **dadurch gekennzeichnet, dass** die Messmittel mindestens eine zusätzliche Spule (5) umfassen, die geeignet ist, sich mit mindestens einem Teil des elektromagnetischen Flusses zu verbinden, der durch den Motor fließt, und dass die Maschine mit Mitteln zum Verarbeiten des elektrischen Signals versehen ist, das durch die zusätzliche Spule erzeugt wird, um geeignet zu sein, das durchschnittliche und momentane Antriebsmoment des Motors zu repräsentieren, und zwar in Übereinstimmung mit dem Signal, das durch die zusätzliche Spule (5) geliefert wird.

2. Maschine nach Anspruch 1, **dadurch gekennzeichnet, dass** die Mittel zum Verarbeiten des elektrischen Signals Integrationsmittel umfassen, vorzugsweise einen Integrationskreis, um das Signal zu integrieren.

3. Maschine nach Anspruch 2, **dadurch gekennzeichnet, dass** der Integrationskreis umfasst:

   - einen Operationsverstärker (10),
   - einen Kondensator (C1) und einen Widerstand (R1), die parallel zueinander angeordnet sind, mit ihrem einen Ende in Reihe mit dem Ausgangsanschluss (11) des Operationsverstärkers verbunden sind und mit ihrem entgegengesetzten Ende über einen Widerstand (R2) mit dem Eingangsanschluss (7) des Integratorkreises verbunden sind.

4. Maschine nach Anspruch 2, **dadurch gekennzeichnet, dass** die Mittel zum Verarbeiten des elektrischen Signals, das durch die zusätzliche Spule (5) erzeugt wird, einen Kreis umfassen, der geeignet ist, die Spitze-Spitze-Spannung ($V_{out}$) des vom Integratorkreis erzeugten Signals zu liefern.

5. Maschine nach Anspruch 4, **dadurch gekennzeichnet, dass** die Mittel zum Liefern der Spitze-Spitze-Spannung umfassen:

   - ein erstes Stromgleichrichterglied (20), das mit seinem einen Anschluss, der eine bestimmte Polarität aufweist, mit dem Ausgangsanschluss (11) des Operationsverstärkers (10) verbunden ist, und
   - in Reihe mit einem ersten Kondensator (21) verbunden ist, dessen entgegengesetzter Anschluss eventuell über eine Impedanz (23) mit einem Eingang (6) für das Signal aus der zusätzlichen Spule (5) verbunden ist;
   - ein zweites Stromgleichrichterglied (25), das mit seinem einen Anschluss mit dem Ausgang (11) des Operationsverstärkers (10) verbunden ist, wobei der Anschluss eine Polarität aufweist, die der Polarität des Anschlusses entgegengesetzt ist, durch den das erste Stromgleichrichterglied (20) mit demselben Ausgangsanschluss (11) verbunden ist,
   - wobei das zweite Stromgleichrichterglied (25) darüber hinaus in Reihe mit einem zweiten Kondensator (24) verbunden ist, der seinerseits mit seinem entgegengesetzten Ende mit dem entgegengesetzten Anschluss (22) des ersten Kondensators (21) verbunden ist.

**Revendications**

1. Lave-linge ou combinaison lavage-séchage, de préférence du type domestique, comprenant:

   - un tambour tournant pour retenir le linge à laver et/ou à sécher, apte à tourner autour d'un axe qui est soit sensiblement horizontal soit incliné,
   - un moteur universel (1) apte à entraîner sélectivement ledit tambour en rotation,
   - des moyens pour commander la vitesse de rotation dudit moteur,
   - des moyens pour mesurer une quantité qui est représentative du couple d'entraînement fourni par ledit moteur,

   **caractérisé en ce que** lesdits moyens de mesure comprennent au moins une bobine additionnelle (5) apte à être liée à au moins une partie du flux électromagnétique traversant ledit moteur, et **en ce que** ladite machine présente des moyens pour le traitement du signal électrique produit par ladite bobine additionnelle de façon à être apte à représenter le couple d'entraînement moyen et instantané dudit moteur en accord avec ledit signal fourni par ladite bobine additionnelle (5).

**2.** Machine selon la revendication 1, **caractérisé en ce que** lesdits moyens de traitement dudit signal électrique comprennent des moyens d'intégration, de préférence un circuit d'intégration, pour intégrer ledit signal.

**3.** Machine selon la revendication 2, **caractérisée en ce que** ledit circuit d'intégration comprend:

> - un amplificateur opérationnel (10),
> - un condensateur (C1) et une résistance (R1), montés en parallèle l'un par rapport à l'autre et montés en série, avec une extrémité de ceux-ci à la borne de sortie (11) dudit amplificateur opérationnel et, avec l'extrémité opposée de ceux-ci par une résistance (R2), à la borne d'entrée (7) du même circuit d'intégration.

**4.** Machine selon la revendication 2, **caractérisée en ce que** lesdits moyens pour le traitement du signal électrique produit par ladite bobine additionnelle (5) comprennent un circuit apte à émettre une tension crête-à-crête (Vout) du signal produit par ledit circuit d'intégration.

**5.** Machine selon la revendication 4, **caractérisée en ce que** lesdits moyens émettant la tension crête-à-crête comprennent:

> - un premier élément de redressement de courant (20) connecté à une borne de ceux-ci ayant une polarité définie à la borne de sortie (11) dudit amplificateur opérationnel (10), et
> - montée en série avec un premier condensateur (21), la borne opposée (22) est connectée, éventuellement par une impédance (23), à une entrée (6) pour ledit signal émis par ladite bobine additionnelle (5);
> - un deuxième élément de redressement de courant (25) connecté à une borne de ceux-ci à ladite sortie (11) dudit amplificateur opérationnel, ladite borne ayant une polarité qui est opposée à la polarité de la borne à laquelle ledit premier élément de redressement de courant (20) est connecté à la même borne de sortie (11);
> - ledit deuxième élément de redressement de courant (25) étant en outre monté en série à un deuxième condensateur (24) qui est à son tour connecté à la borne opposée de celui-ci à ladite borne opposée (22) dudit premier condensateur (21).

**Fig. 1.** Schematic diagram of the motor with measurement coil

**Fig. 3**

7

**Fig.** 4. Schematic diagram of the signal processing arrangement to process the signal $V_c$ issuing from the measurement coil

**Fig.** 5. Typical pattern of output signals (example)

**EP 1 835 062 B1**

### Patent documents cited in the description

- US 20040211009 A
- EP 04102927 A
- JP 03040744 A